(19) Europäisches Patentamt / European Patent Office / Office européen des brevets

(11) **EP 3 761 559 A1**

(12) **EUROPEAN PATENT APPLICATION**
published in accordance with Art. 153(4) EPC

(43) Date of publication:
**06.01.2021 Bulletin 2021/01**

(51) Int Cl.:
**H04L 12/24** *(2006.01)*

(21) Application number: **18910654.5**

(22) Date of filing: **19.03.2018**

(86) International application number:
**PCT/CN2018/079422**

(87) International publication number:
**WO 2019/178714 (26.09.2019 Gazette 2019/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **HUAWEI TECHNOLOGIES CO., LTD.**
  **Shenzhen, Guangdong 518129 (CN)**
• **Tsinghua University**
  **Beijing 100084 (CN)**

(72) Inventors:
• **FAN, Hangyu**
  **Beijing 100084 (CN)**

• **LI, Yong**
  **Beijing 100084 (CN)**
• **FANG, Shoushuo**
  **Beijing 100084 (CN)**
• **HOU, Jie**
  **Shenzhen, Guangdong 518129 (CN)**
• **LIN, Chengyong**
  **Shenzhen, Guangdong 518129 (CN)**
• **HE, Chengcheng**
  **Shenzhen, Guangdong 518129 (CN)**
• **DONG, Wenxia**
  **Shenzhen, Guangdong 518129 (CN)**

(74) Representative: **Thun, Clemens**
  **Mitscherlich PartmbB**
  **Patent- und Rechtsanwälte**
  **Sonnenstraße 33**
  **80331 München (DE)**

(54) **FAULT DETECTION METHOD, APPARATUS, AND SYSTEM**

(57)    This application discloses a fault detection method, where the method is applied to a distributed node cluster, the node cluster includes a plurality of nodes, the method is performed by any one of the plurality of nodes, the any one node is a first node, and the method includes: determining, by the first node, whether a trigger condition for health assessment is met; and when the trigger condition for health assessment is met, separately assessing, by the first node, health of other nodes in the node cluster based on heartbeat delay data between the first node and the other nodes in the node cluster, and obtaining assessment results of the health of the other nodes in the cluster.

```
┌─────────────────────────────────────────────┐
│  A first node collects N sets of heartbeat   │──── 401
│  data                                         │
└─────────────────────────────────────────────┘
                      │
┌─────────────────────────────────────────────┐
│ The first node calculates M assessed values  │──── 402
│ based on the N sets of heartbeat data         │
└─────────────────────────────────────────────┘
                      │
              Determine
No    whether a quantity of assessed            ──── 403
      values greater than a preset healthy
      value in the M assessed values exceeds
      a preset percentage
                      │ Yes
┌─────────────────────────────────────────────┐
│ The first node determines that the first     │──── 404
│ node is a faulty node                         │
└─────────────────────────────────────────────┘
                      │
┌─────────────────────────────────────────────┐
│ The first node determines that the first     │──── 405
│ node is a normal node                         │
└─────────────────────────────────────────────┘
                      │
┌─────────────────────────────────────────────┐
│ The first node determines a management node   │──── 406
│ in a node cluster based on a node whose       │
│ self-test result is normal among M nodes      │
└─────────────────────────────────────────────┘
                      │
┌─────────────────────────────────────────────┐
│ If the first node determines the first node   │──── 407
│ as the management node, the first node        │
│ removes or isolates K nodes from the M        │
│ nodes based on the M assessed values          │
└─────────────────────────────────────────────┘
```

FIG. 4

EP 3 761 559 A1

**Description**

**TECHNICAL FIELD**

This application relates to the communications field, and in particular, to a fault detection method, apparatus, and system.

**BACKGROUND**

With advanced features such as high concurrency, autonomy, fault tolerance, and reliability, distributed systems have been widely applied to various control systems in industrial circles. In a decentralized cluster, nodes appear in a peer-to-peer manner and usually have a similar function. In such a cluster, performance of an entire cluster is not greatly affected when any single node is faulty or performance of any single node deteriorates. To overcome a node or link fault because of a single point of bottleneck, each node added to the cluster should have a network fault detection capability and a limited cluster management capability.

In the prior art, each node in a cluster is monitored by a fault detection mechanism of some other nodes. When a fault occurs in a node in the cluster, a monitor of the node discovers the fault and broadcasts a message about the fault to the cluster. When receiving the message about the fault, a management node (Leader) in the cluster starts a timer for the node, and if the node is still not recovered to normal before the timer expires, the management node executes a decision on the faulty node when the timer expires, for example, removes the faulty node from the cluster.

In this solution, a decision is made based on only a time, and in some cases, an incorrect decision is made. For example, when the fault of the faulty node is reflected as a packet loss at a specific probability, the faulty node still has an opportunity to communicate with a normal node. However, based on an existing technical solution, a normal node may be marked as faulty because of a packet loss and information about the fault is broadcast to the cluster. If the management node of the cluster receives the fault report, the management node removes the normal node from the cluster. Therefore, accuracy of fault detection is relatively low in the fault detection solution in the existing technical solution.

**SUMMARY**

Embodiments of this application provide a fault detection method, apparatus, and system, so as to improve accuracy of fault detection.

According to a first aspect, an embodiment of this application provides a fault detection method, where the method is applied to a distributed node cluster, the node cluster includes a plurality of nodes, the method is performed by any one of the plurality of nodes, the any one node is a first node, and the method includes:
when the first node determines that a trigger condition for node health assessment is met, separately assessing, by the first node, health of other nodes in the node cluster based on heartbeat delay data between the first node and the other nodes in the node cluster, and obtaining assessment results of the health of the other nodes in the cluster.

In this implementation, the first node obtains a plurality of sets of heartbeat delay data between the first node and all the other nodes in the node cluster, and then assesses the health conditions of the other nodes based on the heartbeat delay data, so that fault detection may be performed based on the assessment results of the health conditions of the other nodes. In this way, accuracy of fault detection is improved.

In a possible implementation, the first node collects N sets of heartbeat delay data of all the nodes in the node cluster except the first node, where each set of heartbeat delay data includes M pieces of heartbeat delay data, N and M each are an integer greater than 1, and the node cluster includes the first node. Then, the first node calculates M assessed values about communication statuses between the first node and the M nodes based on the N sets of heartbeat delay data, where a smaller assessed value indicates a better communication status, a node corresponding to an assessed value greater than or equal to a preset healthy value is a faulty node, the M nodes does not include the first node, and a total quantity of node clusters is M+1. Then, the first node compares the preset healthy value with each of the M assessed values obtained through calculation. If an assessed value is less than the preset healthy value, it indicates that the assessed value is a healthy value, and a corresponding node is a healthy node or a normal node; or if an assessed value is greater than or equal to the preset healthy value, it indicates that the assessed value is an unhealthy value, and correspondingly, a node corresponding to the assessed value is an unhealthy node or a faulty node.

Further, the first node may assess whether the first node is healthy based on a quantity of assessed values indicating healthy or unhealthy in the foregoing M assessed values. Specific assessment may be as follows: If a quantity of assessed values whose assessment results indicate healthy values in the M assessed values exceeds a preset percentage, for example, exceeds fifty percent, determining that the first node is a faulty node. Further, after the first node determines that the first node is a faulty node, the first node may perform corresponding processing according to a processing manner specified in a fault decision, for example, idle or close the first node.

In this implementation, the first node obtains a plurality of sets of heartbeat delay data between the first node and all the other nodes in the node cluster, and then assesses the communication statuses between the first node and each node based on the heartbeat delay data, and determines whether the first node is a faulty node based on a percentage of healthy nodes according to the communication statuses. In this way, each node is capable of assessing a fault by itself without depending on other nodes in the node cluster to perform fault assessment, and after determining that the node is a faulty node, the node can idle the node or perform other processing. In this way, a fault decision made by a faulty node, multiple fault processing that may be caused, and the like can be prevented to some extent. Therefore, a fault detection manner can be more proper and highly efficient, and accuracy and efficiency of the fault detection are improved.

In another possible implementation, the calculating, by the first node, M assessed values based on the N sets of heartbeat delay data may be as follows:

calculating, by the first node, the M assessed values based on jitters of the M pieces of heartbeat delay data in the N sets of heartbeat delay data, where the jitters of the M pieces of heartbeat delay data are jitters of heartbeat delay data between the first node and each of the M nodes, and a greater jitter amplitude of heartbeat delay data indicates a greater assessed value.

A jitter of heartbeat delay data means a jitter shown in N pieces of heartbeat delay data between the first node and a same node. A greater jitter amplitude indicates a worse communication status and a greater assessed value. A smaller jitter indicates a better communication status and a smaller assessed value. In this implementation, an assessed value is calculated based on a jitter of heartbeat delay data. In this way, calculation of the assessed value is more proper, and therefore subsequently a fault is determined more accurately.

Optionally, the first node may further calculate the M assessed values based on the jitters of the M pieces of heartbeat delay data and delay levels of the M pieces of heartbeat delay data in the N sets of heartbeat delay data, where the delay levels of the M pieces of heartbeat delay data are delay levels of the heartbeat delay data between the first node and each of the M nodes.

The delay level indicates a round-trip delay level of a heartbeat between the first node and one of the M nodes. For example, the delay level is a mean delay value. The delay level can reflect the communication status between the first node and the other nodes to some extent. Therefore, the assessed values can be calculated more properly with reference to the delay levels and the jitters.

Optionally, before the first node calculates the M assessed values based on the N sets of heartbeat data, alternatively, the first node may first delete invalid data from the N sets of heartbeat data. During heartbeat delay data collection, some invalid data may be collected because of a network condition, for example, noise data. The invalid data is usually significantly different from actual heartbeat delay data. Therefore, the invalid data may be first deleted through filtering or noise reduction.

Optionally, after obtaining the M assessed values through calculation, the first node may alternatively standardize the M assessed values, so that the first node can uniformly compare assessed values in network environments with different delays or when heartbeat delay data has different window sizes.

In another possible implementation, the method further includes:

if a quantity of assessed values greater than the preset healthy value in the M assessed values exceeds a preset percentage, determining, by the first node, that the first node is a faulty node; or if a quantity of assessed values greater than the preset healthy value in the M assessed values does not exceed a preset percentage, determining, by the first node, that the first node is a normal node.

If a quantity of unhealthy assessed values is relatively large, it indicates that communication statuses between the first node and most of the other nodes are relatively poor, and therefore, the first node determines that the first node is a faulty node. If a quantity of unhealthy assessed values is relatively small, it indicates that communication statuses between the first node and most of the other nodes are relatively good, and therefore, the first node determines that the first node is a normal node.

Optionally, after the first node determines that the first node is a faulty node, the first node may further idle or close the first node.

Idling means that the first node does not process a fault, but still performs current normal processing and waits until a management node removes the first node. Closing means that the first node closes all ongoing processes in the first node.

Optionally, after the determining, by the first node, that the first node is a normal node, the method further includes:

determining, by the first node, a management node in the node cluster based on the M assessed values.

A faulty node cannot be a management node. Therefore, if the first node is a faulty node, there is no need to determine whether the first node is the management node, or if the first node is a normal node, the first node further needs to determine whether the first node is the management node.

A manner of determining the management node may be as follows:

determining, by the first node based on the M assessed values, that nodes corresponding to assessed values less than or equal to the preset healthy value in the node cluster are normal nodes, and then obtaining sequence numbers of the determined normal nodes; and comparing, by the first node, a sequence number of the first node with the obtained sequence numbers, and if the sequence number of the first node is less than any one of the obtained sequence numbers, determining that the first node is the management node.

In this implementation, it is determined that a node with a smallest sequence number among all the normal nodes in the node cluster is the management node. Optionally, a manner of determining the management node may further be another manner. For example, it is determined that a node with a largest sequence number among all the normal nodes in the node cluster is the management node. This is not limited in this application. In this implementation, each node can determine, through self-assessment, whether the node is the management node in the node cluster. This prevents a case in which a plurality of nodes are management nodes and consequently a fault processing conflict and the like that may be caused by a plurality of fault decisions occur. After a node assesses that the node is a faulty node, the node does not participate in determining the management node, and therefore, no faulty node becomes the management node. In this way, stability of the node cluster is also improved.

In another possible implementation, after determining that the first node is the management node, the method further includes:

removing or isolating, by the first node, K nodes from the M nodes based on the M assessed values, where the K nodes are nodes whose assessed values are greater than the preset healthy value, where K is an integer greater than or equal to 0.

In this implementation, after it is determined that the first node is the management node, the first node needs to perform a management function of the management node, to be specific, needs to remove or isolate a faulty node from the node cluster. In this way, impact of the faulty node on the node cluster is reduced.

In another possible implementation, the trigger condition for node health assessment is that the first node detects an abnormal node in the node cluster or the first node receives a message that is broadcast by another node and that indicates that there is an abnormal node, and before the calculating, by the first node, M assessed values based on the N sets of heartbeat delay data, the method further includes:

the first node determines whether the abnormal node recovers to normal within preset duration; and if the abnormal node does not recover to normal within the preset duration, the first node starts to calculate the M assessed values based on the collected N sets of heartbeat delay data; or if the abnormal node recovers to normal within the preset duration, the first node does not need to calculate any assessed value.

In the node cluster, each node is monitored by one or more of other nodes, to be specific, to check in real time whether the node is abnormal. For example, the first node monitors a second node in real time, the first node sends a measurement signal to the second node, and if the second node does not reply with reception acknowledgement information or does not reply for a long time, it indicates that the second node may be abnormal. In this case, the first node may start to collect heartbeat delay data.

In this implementation, whether there is a node that may be abnormal in the node cluster is first detected through abnormality detection; and if a detected abnormal node recovers to normal within a relatively short time, there is no need to perform subsequent assessment and determine a fault, or if a detected abnormal node does not recover to normal within a relatively short time, it indicates that a faulty node appears in the node cluster, and steps such as performing subsequent assessment and determining the faulty node are performed. In this way, system resource utilization is improved.

According to a second aspect, an embodiment of this application provides a fault detection apparatus. The apparatus has a function of implementing any one of the described implementations according to the first aspect. The function may be implemented by hardware, or may be implemented by corresponding software executed by hardware. The hardware or the software includes one or more modules corresponding to the foregoing function.

According to a third aspect, an embodiment of this application provides a fault detection apparatus. The apparatus includes a processor and a memory, where the processor and the memory are connected by using a bus, the memory stores a computer instruction, and the processor is configured to implement any one of the described implementations according to the first aspect by executing the computer instruction.

According to a fourth aspect, an embodiment of this application provides a readable storage medium. The storage medium stores a computer instruction that is used to implement any one of the described implementations according to the first aspect.

According to a fifth aspect, an embodiment of this application provides a computer program product, where the computer program product includes a computer software instruction, and the computer software instruction may be loaded by using a processor, to implement a procedure in any one of the described implementations according to the first aspect.

According to a sixth aspect, an embodiment of this application provides a chip apparatus. The chip system includes a processor and a memory, the processor is connected to the memory, and the processor may run an instruction stored in the memory, so that the chip apparatus performs any one of the described implementations according to the first aspect.

According to a seventh aspect, an embodiment of this application provides a fault detection system. The system is a distributed cluster system, the node cluster system includes a plurality of nodes, and each node is similar to the first node performing any implementation according to the first aspect.

## BRIEF DESCRIPTION OF DRAWINGS

FIG. 1 is a schematic diagram of an embodiment of a system architecture to which a fault detection method is applied according to an embodiment of this application;

FIG. 2 is a schematic diagram of an embodiment of module division of a node according to an embodiment of this application;

FIG. 3 is a schematic diagram of an embodiment of unit division of a node according to an embodiment of this application;

FIG. 4 is a schematic diagram of an embodiment of a fault detection method according to an embodiment of this application;

FIG. 5 is a schematic flowchart for triggering heartbeat collection and assessment according to an embodiment of this application;

FIG. 6 is a schematic framework diagram of an assessment model according to an embodiment of this application;

FIG. 7 is a schematic diagram of an application scenario to which a fault detection method is applied according to an embodiment of this application;

FIG. 8 is a schematic diagram of another application scenario to which a fault detection method is applied according to an embodiment of this application;

FIG. 9 is a schematic diagram of another application scenario to which a fault detection method is applied according to an embodiment of this application;

FIG. 10 is a schematic diagram of an embodiment of a fault detection apparatus according to an embodiment of this application; and

FIG. 11 is a schematic diagram of another embodiment of a fault detection apparatus according to an embodiment of this application.

## DESCRIPTION OF EMBODIMENTS

Embodiments of this application provide a fault detection method, apparatus, and system, so as to improve accuracy of fault detection.

The following clearly and completely describes the technical solutions in the embodiments of this application with reference to the accompanying drawings in the embodiments of this application. Apparently, the described embodiments are merely some but not all of the embodiments of this application. In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances, so that the embodiments described herein can be implemented in other orders than the order illustrated or described herein. In addition, the terms "include", "contain" and any other variants mean to cover the non-exclusive inclusion, for example, a process, method, system, product, or device that includes a list of steps or units is not necessarily limited to those steps or units, but may include other steps or units not expressly listed or inherent to such a process, method, system, product, or device.

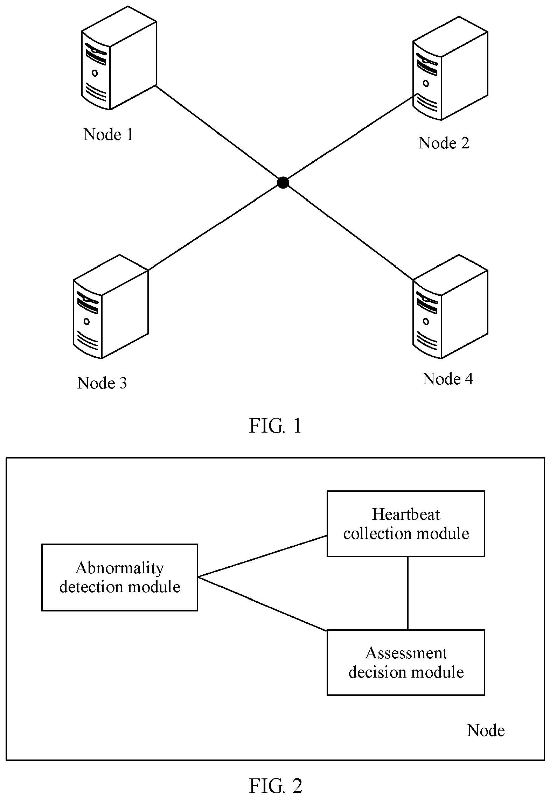

FIG. 1 is a schematic diagram of a system architecture to which a fault detection method is applied according to an embodiment of this application. FIG. 1 shows a node cluster, and the node cluster includes a plurality of nodes. For ease of description, the node cluster in FIG. 1 is described by using four nodes as an example, including a node 1, a node 2, a node 3, and a node 4. The four nodes are connected to each other, and each node is monitored by one or more of other nodes. Each node includes an abnormality detection module, a heartbeat collection module, and an assessment decision module, as shown in FIG. 2. It should be noted that the fault detection method provided in this embodiment of this application may be applied to any decentralized cluster environment (for example, a cluster organization mode named an Akka cluster) that does not include a dedicated fault detection node and that is organized based on a peer-to-peer (peer-to-peer, P2P) network mode. This is not limited in this application.

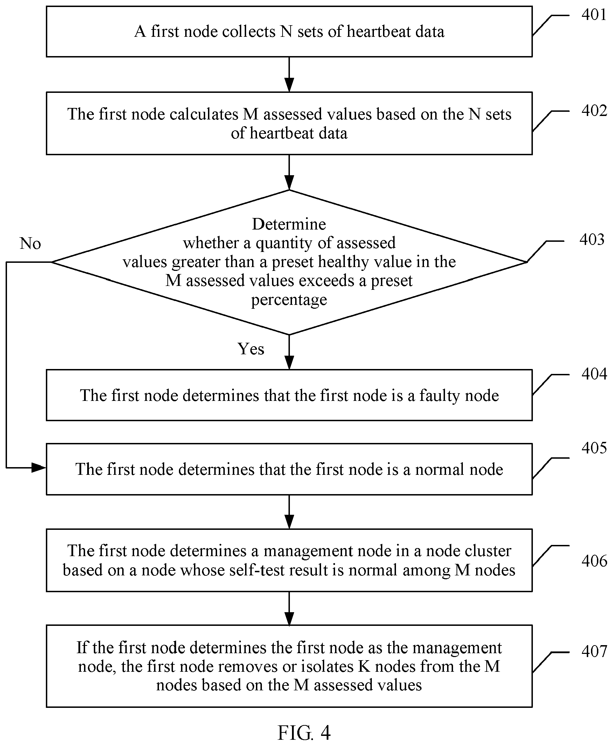

In this application, the abnormality detection module is configured to detect, in real time, an abnormal condition of other nodes monitored by a node. For example, when the node 1 detects, by using the abnormality detection module, that the node 2 may be abnormal, the node 1 may notify, through broadcast, the node 2, the node 3, and the node 4 of information about the abnormality, and agree that all nodes make an assessment decision if the node 2 does not recover to a normal condition within preset duration, for example, 10 seconds, or there is no need to make an assessment decision if the node 2 recovers to a normal condition within preset duration. For details, refer to description of step 402 in the following embodiment of FIG. 4.

The heartbeat collection module is configured to collect heartbeat delay data of all the nodes in the node cluster. The heartbeat delay data is a heartbeat round-trip delay from a node to another node. For example, when the node 1 detects that the node 2 may be abnormal, the node 1 broadcasts information about the abnormality, and then all the nodes in the node cluster start to collect heartbeat delay data by using the heartbeat collection module. In an implementation, the heartbeat delay data collected by the heartbeat module is heartbeat delay data collected by a node by sending heartbeat measurement information to other nodes in the node cluster after receiving the broadcast information about the abnormality. The heartbeat delay data collected in this implementation can relatively accurately reflect a network communication condition of the entire node cluster. In another implementation, because collecting heartbeat delay data by sending heartbeat measurement information consumes a relatively long collection time, a small amount of heartbeat delay data is collected within a relatively short time. However, the collected heartbeat delay data is to be used to subsequently make an assessment decision, and the assessment decision is more accurate when more heartbeat delay data is used. Therefore, in this implementation, after receiving the broadcast information about the abnormality, a node not only sends heartbeat measurement information to other nodes in the node cluster to collect an amount of heartbeat delay data, but also may collect an amount of most recent historical heartbeat delay data. The historical heartbeat delay data means heartbeat delay data collected by the node by sending heartbeat measurement information before the node currently sends the heartbeat measurement information. Each node needs to collect N sets of heartbeat delay data, where N is an integer greater than 1. For example, each node collects 10 sets of heartbeat delay data, and the heartbeat delay data collected by each node is used by the assessment decision module to analyze a fault.

The assessment decision module is configured to: assess a health condition of a communication link between nodes based on the N sets of heartbeat delay data collected by the heartbeat collection module, and determine, based on a result of the assessment, whether a node is faulty. For example, the node 1 calculates assessed values between the node 1 and the other nodes based on heartbeat jitters of the collected N sets of heartbeat delay data. For example, the node 1 calculates that an assessed value between the node 1 and the node 2 is 2.3, an assessed value between the node 1 and the node 3 is 3.1, and an assessed value between the node 1 and the node 4 is 1.4. Then, the node 1 determines, based on a preset healthy value, links whose assessed values are unhealthy. For example, when the preset healthy value is 2.5, the node 1 may determine that the link between the node 1 and the node 2 is normal, the link between the node 1 and the node 3 is abnormal, and the link between the node 1 and the node 4 is normal. Then, the node 1 determines, based on collected statuses of the plurality of links by using the assessment decision module, whether the node 1 is a normal node. If a quantity of normal links exceeds a preset percentage, for example, exceeds fifty percent, the node 1 determines that the node is a normal node; or if a quantity of normal links does not exceed a preset percentage, the node 1 determines that the node is a faulty node. For example, in the foregoing example, the node 1 may determine that the node 1 is a normal node. The assessment decision module is further configured to determine, by a node, whether the node can become a management (Leader) node and is capable of removing or isolating a faulty node when the node is the management node. For example, when the node 1 is a normal node, the node determines, based on a sequence number of the node and sequence numbers of other normal nodes, whether the node 1 is the management node. A sequence number of a first node is obtained by the first node by performing a hash operation based on an IP address and a port number of the node. When joining the node cluster, each node broadcasts, to all nodes, a sequence number of the node that is obtained through calculation. Therefore, the first node stores all sequence numbers of the other nodes. For example, a method for determining the management node is: determining that a node with a smallest sequence number among the normal nodes is the management node. The normal nodes herein mean that when the node 1 determines that the node 1 is a normal node after the assessment, all nodes whose communication links with the node 1 are healthy are the normal nodes (for example, the node 2 and the node 4). After the node 1 determines that the node 1 is the management node, the node 1 further needs to remove or isolate the faulty node 3 from the node cluster.

It should be noted that the node described in this application may be a server, or may be a terminal, or may be another device having capabilities of the foregoing modules. This is not limited in this application.

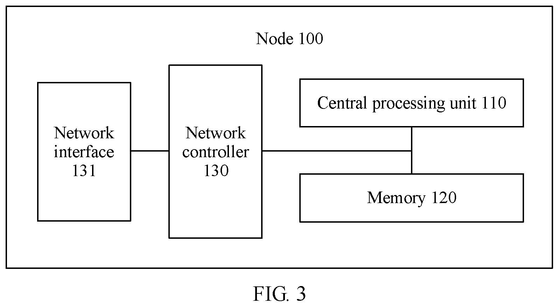

The node described in this embodiment of this application may be alternatively reflected in another manner. As shown in FIG. 3, in this embodiment, the node 100 includes a processor 110, a memory 120, a network controller 130, and a network interface 131. The processor 110, the memory 120, the network controller 130, and the network interface 131 are separately connected by using a bus. The processor 110 is configured to: control the network interface 131 to collect heartbeat delay data of other nodes, calculate a plurality of assessed values based on the heartbeat delay data, and make, based on the plurality of assessed values, a decision on whether the node 100 is faulty. When determining that the node 100 is a normal node, the processor 110 further needs to determine whether the node 100 is a management node. If the processor 110 determines that the node 100 is the management node, the processor 110 further needs to determine, based on the assessed values, a faulty node to be removed or isolated.

The memory 120 is configured to: store a time when a message is sent (for example, a heartbeat measurement message is sent), and obtain and store a round-trip delay of the message that is calculated by the central processing unit 110 based on a time when the network controller 130 receives a return message of the message.

The network controller 130 is configured to send data to a destination node through the network interface 131 based on an instruction of the central processing unit 110. Correspondingly, on an end of the destination node, data is sent by the network controller 130 to the central processing unit 110 through the network interface 131.

Referring to FIG. 4, a fault detection method in an embodiment of this application is described as an example. The embodiment of the fault detection method is applied to the system architecture described in FIG. 1, and a first node may be the node in the embodiment shown in FIG. 2 or FIG. 3. The fault detection method may include the following processing.

401. The first node collects N sets of heartbeat delay data.

Each of the N sets of heartbeat delay data includes M pieces of heartbeat delay data, the M pieces of heartbeat delay data are heartbeat delay data between the first node and M nodes in a node cluster, and the M nodes are all of other nodes in the node cluster except the first node, where N and M each are an integer greater than 1, and a quantity of nodes in the node cluster is M+1.

The N sets of heartbeat delay data collected by the first node are used subsequently to assess health of the other nodes. Before the first node collects the N sets of heartbeat delay data, the first node first determines whether a trigger condition for node health assessment is met. A manner of the determining includes the following implementations.

In an implementation, each node in the node cluster is monitored by one or more adjacent nodes. For example, the node cluster includes four nodes: a first node, a second node, a third node, and a fourth node. The fourth node monitors the first node, the first node monitors the second node, and the third node monitors the fourth node. A monitoring manner is sending a measurement signal between nodes in real time. For example, the first node sends a measurement signal to the second node in real time, and if the first node does not receive acknowledgement feedback from the second node or a delay is excessively high according to feedback, the first node determines that the second node may be abnormal. In this case, the first node may collect heartbeat delay data.

In another implementation, based on a monitoring mechanism in the foregoing implementation, when the first node does not find, through monitoring, that the second node is abnormal, but the third node finds, through monitoring, that the fourth node is abnormal, and the third node broadcasts, in the node cluster, information about abnormality of the fourth node, after the first node receives the information about the abnormality, the first node may also be triggered to perform a step of collecting heartbeat delay data.

In another implementation, all the nodes in the node cluster agree in advance to collect heartbeat delay data based on a preset fixed cycle. For example, all the nodes collect heartbeat delay data every 10 minutes, and the collection ends after 10 sets of heartbeat delay data are collected, or the collection ends after the collection is performed for 10 seconds.

When collecting the heartbeat delay data, the first node needs to collect heartbeat delay data of all the nodes in the node cluster. A manner of collecting heartbeat delay data is a manner of sending heartbeat measurement information or a manner of collecting historical heartbeat delay data, as described in the embodiment of FIG. 1. The first node collects the N sets of heartbeat delay data, where each of the N sets of heartbeat delay data includes M pieces of heartbeat delay data. The N sets of heartbeat delay data indicate heartbeat delay data collected by the first node at N different time points. The M pieces of heartbeat delay data indicate that each set of heartbeat delay data includes M pieces of heartbeat delay data between the first node and all the other nodes, and a quantity of all the other nodes is M. For example, the first node collects two sets of heartbeat delay data, including a first set and a second set of heartbeat delay data: [1, 2, 1] and [3, 4, 5]. The first set of heartbeat delay data indicates that a heartbeat round-trip delay between the first node and the second node is 1 millisecond, a heartbeat round-trip delay between the first node and the third node is 2 milliseconds, and a heartbeat round-trip delay between the first node and the fourth node is 1 millisecond. The second set of heartbeat delay data indicates that a heartbeat round-trip delay between the first node and the second node is 3 milliseconds, a heartbeat round-trip delay between the first node and the third node is 4 milliseconds, and a heartbeat round-trip delay between the first node and the fourth node is 5 milliseconds. Based on the foregoing example, N is 2, including the first set and the second set respectively; and M is 3, indicating that the quantity of other nodes is 3, and therefore, each set includes three pieces of collected heartbeat delay data. It should be noted that the heartbeat round-trip delay in this embodiment of this application may be measured in the foregoing milliseconds, or may be measured in microseconds or seconds. This is not limited in this application.

402. The first node calculates M assessed values based on the N sets of heartbeat delay data.

In a specific embodiment, the M assessed values are used to indicate communication statuses between the first node and the M nodes, and a smaller assessed value indicates a better communication status.

As described in step 401, each set of heartbeat delay data includes M pieces of heartbeat delay data, and the M pieces of heartbeat delay data represent heartbeat delay data separately collected between the first node and each of the other nodes in the node cluster. After the first node collects the N sets of heartbeat delay data, it indicates that the first node separately collects heartbeat delay data of all the other nodes in the node cluster for N times. For each of the other nodes, the first node has N pieces of heartbeat delay data collected at different time points. Therefore, the first node may calculate one assessed value for any one of the other nodes based on the N pieces of heartbeat delay data collected at different time points. There are M other nodes in the node cluster, and therefore, M assessed values are obtained. The M assessed values indicate communication statuses between the first node and the other M nodes in the node cluster that are calculated by the first node. For example, if an assessed value between the first node and the second node is relatively small, it indicates that a communication status between the first node and the second node is relatively good.

Optionally, if the implementation described in step 401 is used, that is, the first node finds, through monitoring, that another node is abnormal, or the first node receives abnormality information broadcast by another node, before the first node calculates the M assessed values based on the N sets of heartbeat delay data, this embodiment of this application may further include the following steps:

the first node determines whether the abnormal node recovers to normal within preset duration; and if the abnormal node does not recover to normal within the preset duration, the first node performs a step of calculating the M assessed values based on the N sets of heartbeat delay data, or if the abnormal node recovers to normal within the preset duration, the first node may not perform a step of calculating the M assessed values based on the N sets of heartbeat delay data.

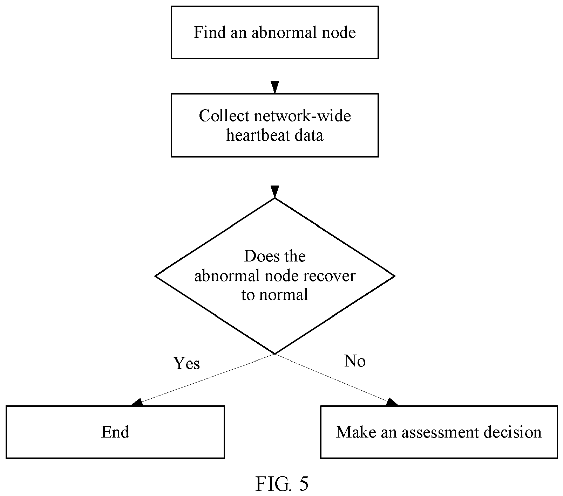

As shown in FIG. 5, abnormality detection in this monitoring mechanism is not particularly perfect, and the abnormality may be caused by a link problem or a loss of few packets. For example, if the second node is actually a normal node, after the first node detects that the second node is abnormal, the first node further needs to continue to measure the second node, and if the first node detects that the second node recovers to normal within specific duration, the first node does not need to calculate an assessed value, or if the second node does not recover to normal within specific duration, the first node may calculate an assessed value (for a manner of calculating the assessed value, refer to subsequent description of this step). It should be noted that after the first node detects an abnormal node or the first node receives abnormality information broadcast by another node, the first node starts to collect heartbeat delay data. In a collection phase, the first node continues to detect the monitored abnormal node, or continues to receive information broadcast by other nodes; and if the abnormal node does not recover to normal within a period of time, the first node calculates an assessed value, or if the abnormal node recovers to normal within a period of time, the first node does not need to calculate an assessed value.

After collecting the N sets of heartbeat delay data, the first node may assess, based on the collected heartbeat delay data, health conditions of link communication between the first node and the other nodes, so as to obtain the M assessed values.

Optionally, an embodiment of this application further provides a method for calculating the M assessed values based on the N sets of heartbeat delay data: calculating, by the first node, the M assessed values based on jitters of the M pieces of heartbeat delay data in the N sets of heartbeat delay data, where the jitters of the M pieces of heartbeat delay data are jitters of heartbeat delay data between the first node and each of the M nodes, and a greater jitter amplitude of heartbeat delay data indicates a greater assessed value. An example is used for description below.

For example, N is equal to 3, to be specific, the first node collects three sets of heartbeat delay data: [1, 2, 1], [1, 100, 2], and [1, 1, 1]. It can be learned from the three sets of heartbeat delay data that all heartbeat delay data collected by the first node from the second node is 1, in other words, there is no heartbeat jitter, and therefore it indicates that communication between the first node and the second node is stable; heartbeat delay data collected by the first node from the third node is 2, 100, and 1 respectively, in other words, the heartbeat jitter amplitude is relatively large, and therefore it indicates that a communication link between the first node and the third node may be relatively poor; heartbeat delay data collected by the first node from the fourth node is 1, 2, and 1 respectively, in other words, the heartbeat jitter is relatively small, and therefore it indicates that a communication link between the first node and the fourth node is relatively good.

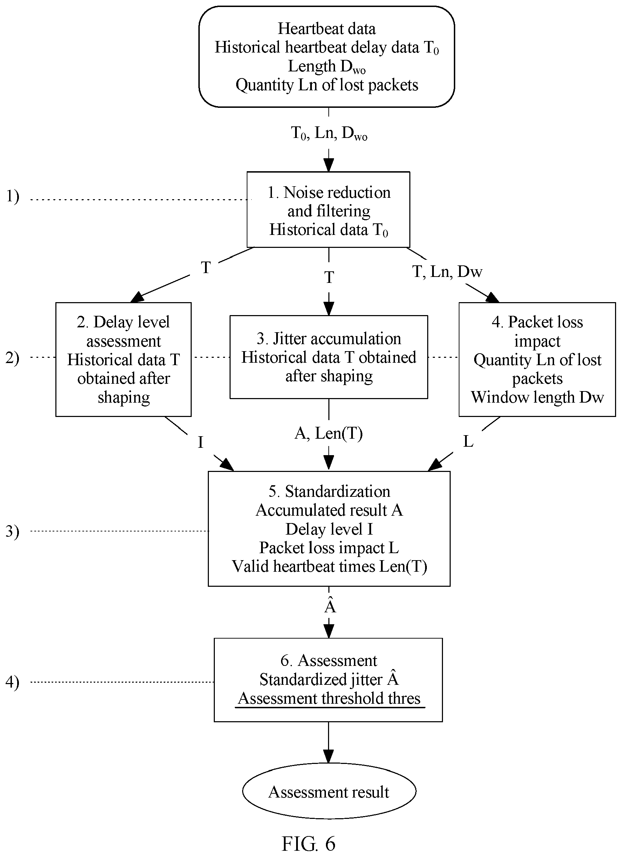

Because of a reliability requirement, the Transmission Control Protocol (transmission control protocol, TCP) is usually used for communication between nodes in the node cluster to ensure reliability of the communication. This application provides a TCP protocol-based node network health assessment model that uses historical heartbeat round-trip delay data as an input. FIG. 6 is an overall framework diagram of the assessment model. The assessment model mainly includes a noise reduction and filtering module, a delay level assessment module, a jitter accumulation module, a standardization module, and a packet loss impact module. The noise reduction and filtering module, the delay level assessment module, the standardization module, and the packet loss impact module are optional modules. The noise reduction and filtering module is configured to filter out some invalid heartbeat delay data. The delay level assessment module is configured to assess a heartbeat round-trip delay. The jitter accumulation module is configured to calculate jitter amplitudes of heartbeat delay data collected by a same node at different moments. The standardization module is configured to standardize a jitter value output by the jitter accumulation module, so that the jitter value is adapted to networks with different delay levels and to different amount of heartbeat delay data. The packet loss impact module is configured to calculate impact on an assessed value when a packet loss occurs. Assessment steps are as follows.

(1) Perform noise reduction on the collected N sets of heartbeat delay data by using the noise reduction and filtering module.

It should be noted that when the first node performs assessment and calculation based on the N sets of heartbeat delay data by using the assessment model, the N pieces of heartbeat delay data on a single-node dimension in the N sets of heartbeat delay data are successively assessed. For example, N is 2, M is 3, and a first set and a second set of heartbeat delay data are [1, 2, 1] and [1, 100, 2] respectively. When the first node inputs the two sets of heartbeat delay data into the assessment model, the two sets of heartbeat delay data are input as (1, 1), (2, 100), and (1, 2). In this way, three assessed values obtained through calculation correspond to communication assessment results of three nodes respectively.

To prevent an assessment result from being adversely affected by a case in which processing of a heartbeat message is rarely delayed because of a factor such as user thread scheduling, this solution considers performing further assessment after filtering the heartbeat delay data. Inputs into the module are collected heartbeat delay data To, Ln, and Dwo, and outputs are filtered heartbeat delay data T, Ln, and Dw, and a filtering strength parameter S is used. To denotes a plurality of pieces of heartbeat delay data preliminarily collected by a first node for one of other nodes; Ln denotes an amount of heartbeat delay data that is lost when the first node collects heartbeat delay data of a node; and Dwo denotes a window size of the heartbeat delay data To, and the window size is an amount of heartbeat delay data preliminarily collected by the first node for the node. T denotes a plurality of pieces of heartbeat delay data obtained after filtering; and Dw denotes a window size of the heartbeat delay data T obtained after filtering. S denotes an amount of invalid data that needs to be filtered out of the plurality of pieces of heartbeat delay data, and S is a preset constant.

In a specific implementation, an implementation of noise reduction and filtering is as follows: deleting largest S pieces of data in heartbeat delay data, to obtain heartbeat delay data T and an amount Dw = len(T) + Ln of the heartbeat delay data that are obtained after filtering, where "len" is an operator for obtaining a vector length, to be specific, used to calculate the amount of the heartbeat delay data T obtained after filtering, Ln denotes an amount of lost heartbeat delay data, and Dw denotes a window size of the heartbeat delay data T obtained after filtering. For example, if S is equal to 1, a set of heartbeat delay data preliminarily collected by the first node for a node is [-1, 2, 3, 10], and "-1" indicates that one piece of heartbeat delay data is lost, Ln is 1, $T_0$ is [2, 3, 10], and Dwo = len(2, 3, 10) + 1, to be specific, 3 + 1 = 4. According to this filtering manner, a largest value 10 needs to be deleted. After the deletion, T is [2, 3], and Ln is 1. According to a calculation formula of the window size Dw, Dw = len(2, 3) + 1 is obtained, to be specific, 2 + 1 = 3.

(2) Input heartbeat delay data obtained after the filtering and noise reduction into the delay level assessment module, the jitter accumulation module, and the packet loss impact module, to separately calculate an inherent delay level of a network, a delay jitter, and impact caused by a heartbeat loss.

Delay level assessment module: In a network with a packet loss, for a TCP ping-pong message, an observed delay at an application layer on a transmitter end may be greater than an inherent delay (caused by the packet loss and a TCP retransmission mechanism). If a mean value of the delay is used as an assessment criterion of the inherent delay of a link, an assessed value is rather large, and consequently a standardization step is adversely affected. To assess the inherent delay of the network based on a delay history of the ping-pong message as accurately as possible, in this solution, it is assumed that an inherent delay of a target network does not drastically fluctuate in a historical heartbeat window. In this case, a great fluctuation in a heartbeat delay history is mainly caused by the TCP retransmission mechanism. However, because of an assumption of a probable packet loss, we consider that p percent of packets in the window are still not affected by the retransmission mechanism, in other words, a round-trip is completed without a packet loss. A heartbeat round-trip delay of these heartbeat packets may be used to reflect the inherent delay of the link. Therefore, we select a smallest P x 100% portion of the heartbeat delay data, and use a mean value of this portion as a criterion for measuring the inherent delay.

An input into the module is the heartbeat delay data T obtained after filtering, and an output is an assessed delay level 1. A percentile parameter p is used to assess a delay, and the percentile parameter p is an empirical value and indicates a specific amount of heartbeat delay data that is used as a basis for assessing a link delay during the delay level assessment. For example, if p is 0.5, to be specific, a percentage 50% is taken, it indicates that half heartbeat delay data with a high delay is deleted, and half heartbeat delay data with a low delay is retained. An assessment algorithm is the following formula:

$$l = mean\Big(left\big(sort(T, ASC), p * len(T)\big)\Big)$$

where mean represents a mean value of elements in a vector, sort represents sorting, ASC represents sort ascending, len(T) represents taking a vector length of the heartbeat delay data T obtained after filtering, in other words, calculating an amount of the heartbeat delay data T obtained after filtering.

In an extreme case, a smallest historical delay may be directly selected from historical data as an output result, to be specific:

$$l = min(T)$$

Jitter accumulation module: This module is configured to calculate a jitter of a heartbeat delay. An accumulation method is as follows: performing differentiation on a historical heartbeat curve to obtain a heartbeat change vector, and quantifying the heartbeat change vector by using an absolute value, and then performing integration on a quantified heartbeat change rate to obtain an accumulated jitter value.

An input into the module is the heartbeat data T obtained after filtering, and an output is an accumulated jitter value A. The following formula is used to calculate the accumulated jitter value:

$$A = \sum(|\Delta T|)$$

where $\Delta T$ represents performing a first-order difference on a vector T, to obtain a difference vector; $|\Delta T|$ represents taking an absolute value for each element of the vector $\Delta T$, to form a new vector; and $\sum(|\Delta T|)$ represents summing elements of the vector $|\Delta T|$ to obtain the accumulated jitter value A.

Packet loss impact module: This module is configured to calculate packet loss impact on an assessed value. In this solution, a specific implementation of the packet loss impact module is as follows: using a product of a packet loss impact factor Lf and a proportion of lost packets as an output L of the packet loss impact module, and transferring the product to the standardization module, where Lf is an empirical value, for example, Lf is 5.

A formula for calculating a packet loss impact value L is as follows:

$$L = \frac{Lf \times L_n}{D_W}$$

(3) Use the outputs of the foregoing three modules as inputs into the standardization module, calculate a standardized heartbeat delay jitter based on these calculation results by using the standardization module, and use the standardized heartbeat delay jitter as an output of the assessment module.

It can be learned from the implementation of the jitter accumulation module that when a packet loss rate does not change, a jitter of heartbeat delay data does not change either, and it indicates that a network is relatively stable. However, as the vector length of the heartbeat data T increases, the accumulated jitter value A also increases. In addition, in networks with different delays, for example, in a network with a hundred microseconds level delay and a network with a hundred milliseconds level delay, when a packet loss rate does not change, as a delay increases, uncertainty brought by a factor such as queuing further increases a jitter.

To enable the accumulated jitter value A to adapt to networks with different delay levels and to sizes of vector lengths of different heartbeat delay data T, to facilitate decision making by a decision maker, the model needs to standardize A.

The standardization model standardizes the accumulated jitter value A by using the mean link delay level 1 and the vector length len(T) of the heartbeat delay data T, and superimposes impact L brought by a heartbeat loss onto an accumulated result.

Inputs into the module are A, L, len(T), and 1, and an output is Â. The following formula is used to standardize A and superimpose A onto the packet loss impact:

$$\hat{A} = \frac{A}{(len(T) - 1) \times l} + L$$

The output quantity Â is measured in 1/s, which reflects strength of a delay jump in a unit time.

To describe functions and usages of the foregoing modules more clearly, an example is used for description below.

It is assumed that a set of heartbeat delay data collected by the first node for the second node is (1, 2, 1, 5, 3, 260, -1, 5, 4, 4), where -1 represents a lost heartbeat. After the lost heartbeat is removed:

TO = (1, 2, 1, 5, 3, 260, 5, 4, 4)
Ln = 1
Dw0 = 10

If the strength S of the noise reduction module is set to 1, after historical heartbeat data is input into the noise reduction module, the following heartbeat delay data is obtained after noise reduction:

T = (1, 2, 1, 5, 3, 5, 4, 4)
Ln = 1
Dw = 9

If the percentile parameter p of the delay level assessment module is set to 0.5, after the filtered historical heartbeat data is input into the delay level module, a calculation process and a result 1 are as follows:

sort(T, ASC) = (1, 1, 2, 3, 4, 4, 5, 5)
p x len(T) = 4
left(sort(T, ASC), p x len(TO)) = (1, 1, 2, 3)
1 = mean(left(sort(T, ASC), p x len(T))) = 2.75

The filtered heartbeat data is input into the jitter accumulation module. A calculation process and a result A are as follows:

$$\Delta T = \{Ti - Ti - 1 \ (0 < i < len(T))\}$$

The foregoing formula indicates differences between every two pieces of heartbeat delay data T, to be specific, a former piece of heartbeat delay data in the heartbeat delay data T is subtracted from a latter piece of heartbeat delay data. The following results are obtained:

$$\Delta T = (2 - 1, 1 - 2, 5 - 1, 3 - 5, \ldots, 4 - 4) = (1, -1, 4, -2, 2, -1, 0)$$

$$|\Delta T| = (1, 1, 4, 2, 2, 1, 0)$$

$$A = \sum(|\Delta T|) = 11$$

If the packet loss impact factor Lf of the packet loss impact module is set to 5, after the filtered historical heartbeat data is input into the packet loss impact module, a result L is as follows:

$$L = 5 \ x \ 1/9 = 0.56$$

After the delay level 1, the accumulated jitter A, the packet loss impact L, and the length len(T) of T are input into the standardization module, a result Â is as follows:

$$\hat{A} = \frac{A}{(len(T) - 1) \times l} + L = 11 / 8 / 2.75 + 0.56 = 1.1$$

403. The first node determines whether a quantity of assessed values greater than a preset healthy value in the M assessed values exceeds a preset percentage. If the quantity of assessed values greater than the preset healthy value in the M assessed values exceeds the preset percentage, the first node performs step 404; or if the quantity of assessed values greater than the preset healthy value in the M assessed values does not exceed the preset percentage, the first node performs step 405.

According to the description in step 402, after obtaining the M assessed values through calculation based on the N sets of heartbeat delay data, the first node determines whether each assessed value is healthy. For example, the first node compares each assessed value with the preset healthy value. If an assessed value is less than or equal to the preset healthy value, it indicates that a corresponding link is normal; or if an assessed value is greater than the preset assessed value, it indicates that a corresponding link is faulty. After obtaining a health condition of each assessed value through calculation, the first node further determines, based on a quantity of unhealthy assessed values, whether the first node is a faulty node. For example, if the preset percentage is fifty percent, the determining manner is as follows: If a quantity of unhealthy assessed values exceeds the preset percentage, it indicates that links between the first node and most nodes are unhealthy, and therefore, the first node may determine that the first node is faulty; or if a quantity of unhealthy assessed values does not exceed the preset percentage, it indicates that links between the first node and most nodes are normal, and therefore, the first node may determine that the first node is a normal node, and may determine that other nodes whose assessed values are less than the preset healthy value are also normal nodes.

As shown in FIG. 6, after M assessed values Â are obtained through calculation, each Â is compared with a preset healthy value thres. If Â is less than the preset healthy value thres, it indicates that the Â is a healthy value; or if Â is not less than the preset healthy value thres, it indicates that the Â is an unhealthy value. For example, according to the example in step 402, the calculated Â is 1.1. If the preset healthy value thres is 2.5, because 1.1<2.5, it indicates that the Â is a healthy value.

404. The first node determines that the first node is a faulty node.

If a quantity of unhealthy assessed values exceeds the preset percentage, it indicates that links between the first node and most nodes are unhealthy, and therefore, the first node may determine that the first node is faulty. After determining that the first node is a faulty node, the first node may close the first node itself, to reduce impact on the node cluster, or the first node may output fault prompt information to prompt a user that the first node is faulty.

Optionally, after the first node determines that the first node is a faulty node, the first node may further idle or close the first node. Idling means that the first node does not process a fault, but still performs current normal processing and waits until a management node removes the first node. Closing means that the first node closes all ongoing processes in the first node.

405. The first node determines that the first node is a normal node.

If a quantity of unhealthy assessed values does not exceed the preset percentage, it indicates that links between the first node and most nodes are normal, and therefore, the first node may determine that the first node is a normal node.

406. The first node determines a management node in the node cluster based on the M assessed values.

After the first node determines that the first node is a normal node, the first node may determine a node that is also normal in the node cluster based on the M assessed values. A determining manner may be comparing the M assessed values with the preset healthy value. If an assessed value is less than the preset healthy value, it indicates that a corresponding node is a normal node, and then the first node determines the unique management node in the node cluster based on the determined normal nodes.

Optionally, a manner of determining the management node may be as follows:

The first node obtains sequence numbers of the normal nodes in the M nodes.

A sequence number of each node is obtained by the node by performing a hash operation based on an inherent IP address and a port number of the node. Sequence numbers of the nodes are different from each other in a node cluster. When a new node joins the node cluster, the new node or the management node broadcasts a sequence number of the new node to all nodes in the node cluster. Therefore, the first node stores sequence numbers of all nodes in the node cluster. The first node finds sequence numbers of current normal nodes from a stored set of sequence numbers of all the nodes.

The first node compares a sequence number of the first node with the obtained sequence numbers.

If the sequence number of the first node is less than any one of the obtained sequence numbers, the first node determines that the first node is the management node; or if the sequence number of the first node is not less than any one of the obtained sequence numbers, the first node determines that the first node is not the management node.

Optionally, the first node may determine the management node based on the sequence numbers in a plurality of manners. Specifically, the management node may be determined based on an agreement of all the nodes in the node cluster. For example, a node with a largest sequence number may be used as the management node, or a random node is determined as the management node and broadcast to other nodes. This is not limited in this application.

407. If the first node determines that the first node is the management node, the first node removes or isolates K nodes from the M nodes based on the M assessed values, where the K nodes are nodes whose assessed values are greater than the preset healthy value.

After determining that the first node is the management node, to reduce impact of a faulty node in the node cluster on the node cluster, the first node needs to remove or isolate the K faulty nodes from the node cluster. A removal manner is as follows: The first node broadcasts information about the K faulty nodes to all the nodes in the node cluster, and after receiving reception acknowledgement information from all the nodes, disconnects communication connections of the K faulty nodes. An isolation manner is as follows: The first node broadcasts information about the K faulty nodes to all the nodes in the node cluster, and instructs all the nodes to blacklist the K nodes, so that all the nodes temporarily do not communicate with the K nodes.

In this embodiment of this application, each node collects heartbeat delay data of all the nodes in the node cluster, calculates corresponding assessed values based on the heartbeat delay data, determines whether the node is faulty based on a percentage of healthy assessed values, and then determines the management node in the node cluster. In this way, accuracy of fault detection is improved.

In addition, according to the solution shown in this embodiment of this application, each node is capable of assessing a fault by itself without depending on other nodes in the node cluster to perform fault assessment, and can idle the node or perform other processing after determining that the node is a faulty node. In this way, a fault decision made by a faulty node, multiple fault processing that may be caused, and the like can be prevented to some extent. Therefore, a fault detection manner can be more proper and highly efficient, and accuracy and efficiency of the fault detection are improved.

In addition, in this embodiment of this application, each node can determine, through self-assessment, whether the node is the management node in the node cluster. This prevents a case in which a plurality of nodes are management nodes and consequently a fault processing conflict and the like that may be caused by a plurality of fault decisions occur. After a node assesses that the node is a faulty node, the node does not participate in determining the management node, and therefore, no faulty node becomes the management node. In this way, stability of the node cluster is also improved.

In addition, that a node uses heartbeat delay data as a basis for fault detection in this embodiment of this application may overcome other problems in the prior art. A disadvantage of an existing solution in which a health condition of a target node is determined based on a seq and a sequence number in an ack in the TCP protocol is as follows: Application logic of a node in a cluster is usually located in a user space of an operating system; however, in this space, an application layer cannot directly read related content of a transport layer in the Internet Protocol (Internet protocol, IP) protocol stack in a kernel mode of a bottom-layer system. If a further mechanism is used to read the content, complexity of the system and dependency on the operating system are increased, and node maintenance costs are increased. In this solution of this application, a node network health assessment model that is based on the TCP protocol and that uses historical heartbeat round-trip delay data as an input is provided. In this way, the assessment model can be implemented based on a collected heartbeat round-trip delay at the transport layer without depending on the bottom-layer system. In addition, system complexity is reduced, and therefore node maintenance costs are reduced.

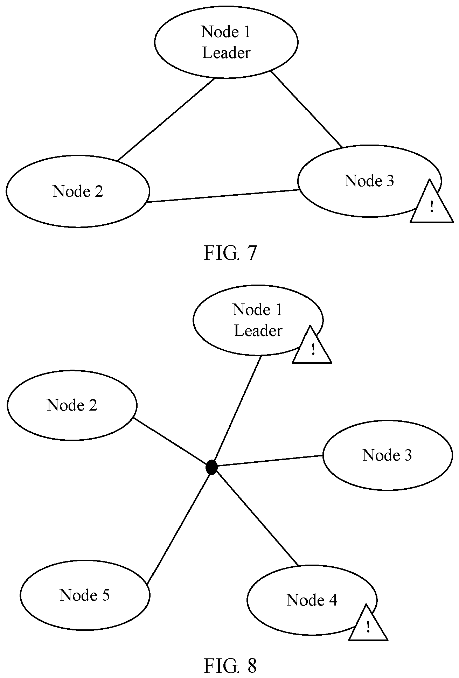

To elaborate the solution of this application more clearly, a fault detection method in an embodiment of this application is described below based on an example with reference to an application scenario shown in FIG. 7. The application scenario shown in FIG. 7 is trigger and decision procedures in this solution of this application when a non-management (Leader) node in a node cluster including three nodes is faulty.

As shown in FIG. 7, a node (Node) 1 is a leader node, and a node 3 is a faulty node. In this embodiment, because the node 1 loses a relatively large quantity of heartbeat messages from the node 3, the node 1 considers that the node 3 is faulty and informs a node 2 of the message. The node 3 also considers that the node 1 is faulty because the node 3 loses a relatively large quantity of messages from the node 1. However, the node 3 still informs the node 2 of the message that is globally incorrect. These messages trigger a heartbeat delay collection module and an assessment decision plan of each node. Consequently, these nodes perform assessment and make decisions after a decision cycle (to be specific, as described in the foregoing embodiments, calculating assessed values and determining whether the node is a faulty node based on the assessed values) ends. If a decision is directly made without assessment, the node 2 considers that the node 2 is a leader node and removes the node 1 and the node 3 from the cluster.

After the decision cycle, each node enters its own assessment decision procedure, and each node performs a self-test based on an assessment result. Because two assessment results of the node 3 indicate that health is poor, the node 3 considers that the node 3 is a faulty node; and because the node 1 and the node 2 find that an assessment result of at least one of other nodes is good, and a quantity of good nodes reaches half of a quantity of assessed values, the node 1 and the node 2 consider that they are in a normal operating state. In addition, because a sequence number of the node 1 is the smaller sequence number in sequence numbers of the node 1 and the node 2, the node 1 considers that the node 1 is the leader node of the cluster, and because a sequence number of the node 2 is greater than the sequence number of the node 1, the node 2 considers that the node 2 is not the leader node of the cluster. In this case, the node 1 removes the node 3 from the cluster at a decision moment, and the node 3 idles or closes the node 3 based on a processing manner specified in a fault decision.

As shown in an application scenario in FIG. 8, FIG. 8 shows trigger and decision procedures in this solution of this application when a management node is faulty and a non-management node is faulty in a node cluster including five nodes.

As shown in FIG. 8, a node 1 is a leader node before the node 1 becomes faulty, but currently the node 1 is faulty, and a node 4 is a faulty non-leader node. FIG. 8 further shows a node fault status found in a fault detection mechanism of each node before decision making.

After the decision cycle, each node enters its own decision procedure. Because both assessment results of the node 1 and the node 4 indicate that statuses from the node 1 and the node 4 to all of other nodes are all poor, the node 1 and the node 4 consider that they are faulty nodes. Because a node 2, a node 3, and a node 5 find that assessment results of nodes are good, and a quantity of nodes assessed as good is greater than half of a quantity of assessed values, the node 2, the node 3, and the node 5 consider that they are normal nodes. In addition, because a sequence number of the node 2 is the smallest sequence number among sequence numbers of these normal nodes, the node 2 is determined as a new leader. In this case, the node 2 removes the node 1 and the node 4 from the cluster, and the node 1 and the node 4 each idle or close itself based on a processing manner specified in a fault decision.

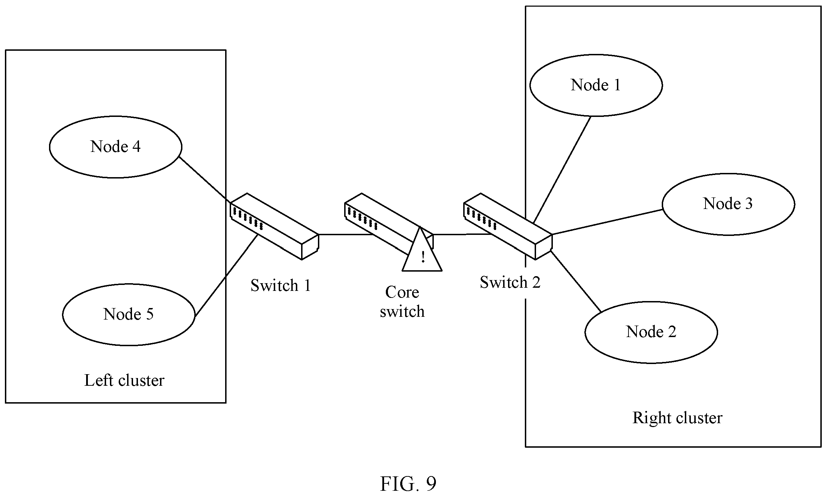

As shown in an application scenario in FIG. 9, FIG. 9 shows trigger and decision procedures in this solution of this application when a switch device is faulty in a node cluster including five nodes.

As shown in FIG. 9, it is assumed that a fault symptom of a faulty core switch is a packet loss at a specific probability. Because a packet loss caused by a fault of the core switch causes a loss of a heartbeat message or a jitter in a round-trip delay of a heartbeat message between a left cluster and a right cluster between five nodes, this symptom will finally be found in a fault detection mechanism of each node, and an assessment decision plan of each node will be triggered.

After the decision cycle, each node enters its own assessment decision procedure. Because self-test results of a node 4 and a node 5 indicate that over a half of cluster nodes are in an unhealthy state, the node 4 and the node 5 consider that they are faulty nodes (actually located in an unhealthy cluster); because assessment states of over a half of nodes are good, a node 1, a node 2, and a node 3 consider that they are normal nodes. In addition, because a sequence number of the node 1 is the smallest of these nodes, the node 1 is a leader of the cluster. The node 1 removes the node 4 and the node 5 from the cluster based on the assessment results; and the node 4 and the node 5 close or idle themselves according to a rule defined based on a cluster fault.

In the implementation described in the foregoing embodiment, when each node calculates assessed values, the node needs to collect heartbeat delay data of all the other nodes in the node cluster, to calculate assessed values of communication links between the node and each node, then determine whether the node is faulty, and then determine whether the node is a management node. Optionally, an embodiment of this application further provides another implementation, as described below.

When a node cluster includes a few nodes, it is considered that network-wide sending of a heartbeat measurement message within a unit time is tolerable. However, in a network environment in which a node cluster includes many nodes, a heartbeat measurement message may cause relatively high network overheads. Therefore, in this implementation, a further solution may be designed: A node first performs a self-test on coarse-grained heartbeat delay data (in other words, possibly least heartbeat delay data), to first attempt to rule out a possibility that the node is a cluster manager, and determine that the node is faulty or the node is a normal node but a sequence number of the node is greater than a sequence number of other normal nodes. If the node cannot rule out the possibility, the node performs a self-test on finer-grained heartbeat delay data (in other words, heartbeat delay data of all nodes in the entire network are collected), to determine that the node is a leader for making a decision.

For example, a node cluster includes 100 nodes. A first node first collects heartbeat delay data of other 20 nodes, and calculates 20 assessed values. If over a half of the assessed values are unhealthy values, the first node may determine that the first node is a faulty node, and then determine that the first node cannot become a management node, and therefore, the first node does not need to collect heartbeat delay data again. If over a half of the assessed values are healthy values, it indicates that the first node is a normal node, and then the first node compares a sequence number of the first node with sequence numbers of normal nodes among the 20 nodes. If the first node determines that the sequence number of the first node is not a smallest sequence number, the first node determines that the first node cannot become a management node, and therefore, the first node does not need to collect heartbeat delay data between the first node and other nodes again. If the first node determines, based on the 20 assessed values, that the first node is a normal node and the sequence number of the first node is the smallest among the sequence numbers of the normal nodes among the 20 nodes, the first node may be a management node. In this case, the first node further needs to collect heartbeat delay data of other 79 nodes, calculate 79 assessed values, determine normal nodes among the 79 nodes, and then compare the sequence number of the first node with sequence numbers of the normal nodes among the 79 nodes. If the sequence number of the first node is still the smallest, the first node determines that the first node is the management node; or if the sequence number of the first node is not the smallest, the first node determines that the first node is not the management node.

In a node cluster with many nodes, generally, a network is relatively stable, it is rarely that massive nodes become faulty, and generally there are very few faulty nodes. Therefore, with this implementation, generally, self-fault detection of a node can be accurately performed, and network overheads are reduced.

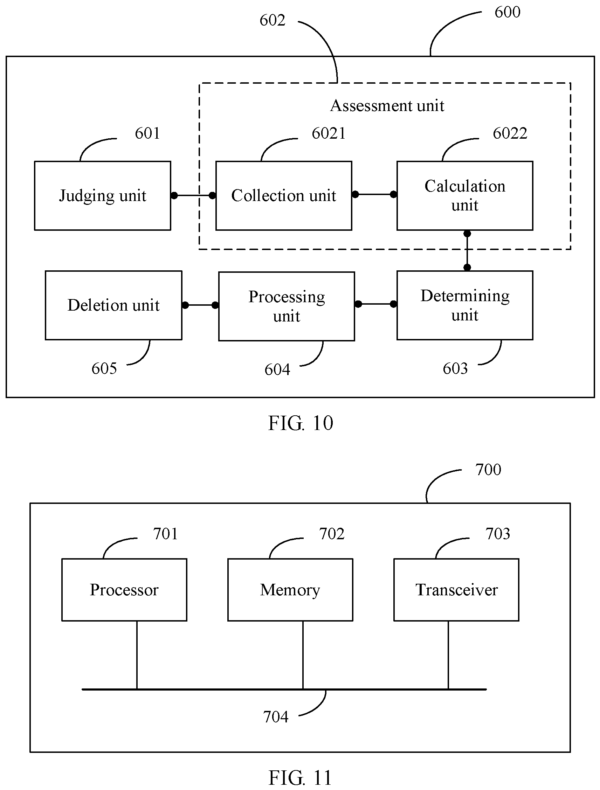

FIG. 10 is a schematic diagram of an embodiment of a fault detection apparatus according to an embodiment of this application. The apparatus 600 is applied to a distributed node cluster, the node cluster includes a plurality of nodes, the method is performed by any one of the plurality of nodes, the any one node is a first node, the apparatus is the first node, and the apparatus 600 includes: a judging unit 601 and an assessment unit 602.

The judging unit 601 is configured to determine whether a trigger condition for node health assessment is met. The assessment unit 602 is configured to: when the trigger condition for node health assessment is met, separately assess health of other nodes in the node cluster based on heartbeat delay data between the first node and the other nodes in the node cluster, and obtain assessment results of the health of the other nodes in the cluster.

Specifically, the judging unit 601 is configured to perform an implementation of triggering health assessment of three nodes that is described in step 401 in the embodiment of FIG. 4.

The assessment unit 602 is configured to perform steps 401 to 403 in the embodiment of FIG. 4.

Optionally, the assessment unit 602 includes:

a collection unit 6021, configured to perform step 401 in the embodiment of FIG. 4; and
a calculation unit 6022, configured to perform step 402 in the embodiment of FIG. 4.

Optionally, the apparatus 600 further includes:
a deletion unit 605, configured to delete invalid data from the N sets of heartbeat delay data before the assessment unit 602 calculates the M assessed values based on the N sets of heartbeat delay data, where N sets of heartbeat delay data obtained after the invalid data is deleted are used to calculate the M assessed values.

Optionally, the apparatus 600 further includes:
a determining unit 603, configured to perform step 404 in the embodiment of FIG. 4.

Optionally, the determining unit 603 is further configured to perform step 405 in the embodiment of FIG. 4.

Optionally, the determining unit 603 is further configured to perform step 406 in the embodiment of FIG. 4.

Optionally, the apparatus 600 further includes:
a processing unit 604, configured to perform step 407 in the embodiment of FIG. 4.

During running, the units described in the embodiment of FIG. 6 perform the steps performed by the first node described in the embodiment of FIG. 4. For details, refer to the embodiment of FIG. 4. Details are not described herein again.

There is another embodiment for the apparatus described in the embodiment of FIG. 6.

FIG. 11 describes an example of a fault detection apparatus provided in an embodiment of this application. The apparatus 700 includes a processor 701, a memory 702, and a transceiver 703. The processor 701, the memory 702, and the transceiver 703 are connected by using a bus 704. The transceiver 703 may include a transmitter and a receiver. The memory 702 stores a computer instruction. The transceiver 703 is configured to collect heartbeat delay data of other nodes. The memory 702 is configured to store the heartbeat delay data collected by the transceiver 703. The processor 701 is configured to invoke the heartbeat delay data in the memory 702 to assess health conditions of the other nodes, and determine whether a current node is a management node.

The processor 701 is at least configured to determine whether a trigger condition for node health assessment is met.

The processor 701 is at least further configured to: when the trigger condition for node health assessment is met, separately assess health of other nodes in the node cluster based on heartbeat delay data between the first node and the other nodes in the node cluster, and obtain assessment results of the health of the other nodes in the cluster.

Specifically:

The transceiver 703 is configured to perform step 401 in the embodiment of FIG. 4.

The memory 702 is configured to store the collected heartbeat delay data.

The processor 701 is configured to perform steps 402 to 407 in the embodiment of FIG. 4.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In another possible design, when the foregoing apparatus is a chip in a device, the chip includes a processing unit and a communications unit. The processing unit may be, for example, a processor, and the communications unit may be, for example, an input/output interface, a pin, or a circuit. The processing unit may execute a computer executable instruction stored in a storage unit, so that the chip in the device performs the resource scheduling method according to any one of the foregoing embodiments. Optionally, the storage unit is a storage unit in the chip, for example, a register or a buffer. Alternatively, the storage unit may be a storage unit that is located in the terminal and outside the chip, for example, a read-only memory (read-only memory, ROM) or another type of static storage device that can store static information and an instruction, or a random access memory (random access memory, RAM).

Any one of the foregoing processors may be a general-purpose central processing unit (CPU), a microprocessor, an application-specific integrated circuit (application-specific integrated circuit, ASIC), or one or more integrated circuits configured to control execution of a program in the foregoing wireless communication method according to the first aspect.

All or some of the foregoing embodiments may be implemented by software, hardware, firmware, or any combination thereof. When software is used to implement the embodiments, the embodiments may be implemented fully or partially in a form of a computer program product.

The computer program product includes one or more computer instructions. When the computer program instructions are loaded and executed on a computer, the procedures or functions according to the embodiments of the present invention are fully or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a soft disk, a hard disk, or a magnetic tape), an optical medium (for example, DVD), a semiconductor medium (for example, a solid state disk Solid State Disk (SSD)), or the like.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

**Claims**

1. A fault detection method, wherein the method is applied to a distributed node cluster, the node cluster comprises a plurality of nodes, the method is performed by any one of the plurality of nodes, the any one node is a first node, and the method comprises:

   determining, by the first node, whether a trigger condition for node health assessment is met; and

when the trigger condition for node health assessment is met, separately assessing, by the first node, health of other nodes in the node cluster based on heartbeat delay data between the first node and the other nodes in the node cluster, and obtaining assessment results of the health of the other nodes in the cluster.

2. The method according to claim 1, wherein the separately assessing, by the first node, health of other nodes in the node cluster based on heartbeat delay data between the first node and the other nodes in the node cluster, and obtaining assessment results of the health of the other nodes in the cluster comprises:

collecting, by the first node, N sets of heartbeat delay data, wherein each of the N sets of heartbeat delay data comprises M pieces of heartbeat delay data, the M pieces of heartbeat delay data are heartbeat delay data between the first node and M nodes in the node cluster, and the M nodes are the other nodes in the node cluster, wherein N and M each are an integer greater than 1; and
calculating, by the first node, M assessed values based on the N sets of heartbeat delay data, wherein the M assessed values are used to indicate communication statuses between the first node and the M nodes, and a node corresponding to an assessed value greater than a preset healthy value is a faulty node.

3. The method according to claim 2, wherein the calculating, by the first node, M assessed values based on the N sets of heartbeat delay data comprises:
calculating, by the first node, the M assessed values based on jitters of the M pieces of heartbeat delay data in the N sets of heartbeat delay data, wherein the jitters of the M pieces of heartbeat delay data are jitters of heartbeat delay data between the first node and between the first node and each of the M nodes, and a greater jitter amplitude of heartbeat delay data indicates a greater assessed value.

4. The method according to claim 3, wherein the calculating, by the first node, the M assessed values based on jitters of the M pieces of heartbeat delay data in the N sets of heartbeat delay data comprises:
calculating, by the first node, the M assessed values based on the jitters of the M pieces of heartbeat delay data and delay levels of the M pieces of heartbeat delay data in the N sets of heartbeat delay data, wherein the delay levels of the M pieces of heartbeat delay data are delay levels of the heartbeat delay data between the first node and each of the M nodes.

5. The method according to claim 4, wherein the calculating, by the first node, the M assessed values based on the jitters of the M pieces of heartbeat delay data and delay levels of the M pieces of heartbeat delay data in the N sets of heartbeat delay data comprises:
calculating, by the first node, the M assessed values based on the jitters of the M pieces of heartbeat delay data, the delay levels of the M pieces of heartbeat delay data, and packet loss statuses of the M pieces of heartbeat delay data in the N sets of heartbeat delay data, wherein the packet loss statuses of the M pieces of heartbeat delay data are packet loss statuses of the heartbeat delay data between the first node and each of the M nodes, and a greater quantity of lost packets indicates a greater assessed value.

6. The method according to any one of claims 3 to 5, wherein before the calculating, by the first node, M assessed values based on the N sets of heartbeat delay data, the method further comprises:
deleting, by the first node, invalid data from the N sets of heartbeat delay data, wherein N sets of heartbeat delay data obtained after the invalid data is deleted are used to calculate the M assessed values.

7. The method according to any one of claims 2 to 6, wherein after the calculating, by the first node, M assessed values based on the N sets of heartbeat delay data, the method further comprises:
if a quantity of assessed values greater than the preset healthy value in the M assessed values exceeds a preset percentage, determining, by the first node, that the first node is a faulty node; or if a quantity of assessed values greater than the preset healthy value in the M assessed values does not exceed a preset percentage, determining, by the first node, that the first node is a normal node.

8. The method according to claim 7, wherein after the determining, by the first node, that the first node is a faulty node, the method further comprises:
idling or closing, by the first node, the first node.

9. The method according to claim 7, wherein after the determining, by the first node, that the first node is a normal node, the method further comprises:
determining, by the first node, a management node in the node cluster based on the M assessed values.

10. The method according to claim 9, wherein the determining, by the first node, a management node in the node cluster based on the M assessed values comprises:

determining, by the first node, all normal nodes in the node cluster based on the M assessed values, wherein if an assessed value is less than or equal to the preset healthy value, it indicates that a corresponding node is a normal node;

obtaining, by the first node, sequence numbers of the determined normal nodes; and

comparing, by the first node, a sequence number of the first node with the obtained sequence numbers, and if the sequence number of the first node is less than any one of the obtained sequence numbers, determining that the first node is the management node.

11. The method according to claim 10, wherein after the determining that the first node is the management node, the method further comprises:

removing or isolating, by the first node, K nodes from the M nodes based on the M assessed values, wherein the K nodes are nodes whose assessed values are greater than the preset healthy value.

12. The method according to any one of claims 1 to 11, wherein the trigger condition for node health assessment is that the first node detects an abnormal node in the node cluster or the first node receives a message that is broadcast by another node and that indicates that there is an abnormal node.

13. The method according to claim 12, wherein before the calculating, by the first node, M assessed values based on the N sets of heartbeat delay data, the method further comprises:

determining, by the first node, whether the abnormal node recovers to normal within preset duration; and

when the abnormal node does not recover to normal within the preset duration, performing, by the first node, a step of calculating the M assessed values based on the N sets of heartbeat delay data.

14. The method according to any one of claims 1 to 11, wherein the trigger condition for node health assessment is that the first node detects that a current moment is a preset cycle moment.

15. The method according to claim 10 to 11, wherein the sequence number is a numerical value obtained by a node by using a preset algorithm based on an Internet Protocol IP address and a port number of the node.

16. A fault detection apparatus, wherein the apparatus is applied to a distributed node cluster, the node cluster comprises a plurality of nodes, the apparatus is any one of the plurality of nodes, the any one node is a first node, the apparatus is the first node, and the apparatus comprises:

a judging unit, configured to determine whether a trigger condition for node health assessment is met; and

an assessment unit, configured to: when the trigger condition for node health assessment is met, separately assess health of other nodes in the node cluster based on heartbeat delay data between the first node and the other nodes in the node cluster, and obtain assessment results of the health of the other nodes in the cluster.

17. The apparatus according to claim 16, wherein the assessment unit comprises:

a collection unit, configured to collect N sets of heartbeat delay data, wherein each of the N sets of heartbeat delay data comprises M pieces of heartbeat delay data, the M pieces of heartbeat delay data are heartbeat delay data between the first node and M nodes in the node cluster, and the M nodes are all the other nodes in the node cluster except the first node, wherein N and M each are an integer greater than 1; and

a calculation unit, configured to calculate M assessed values based on the N sets of heartbeat delay data, wherein the M assessed values are used to indicate communication statuses between the first node and the M nodes, and a node corresponding to an assessed value greater than a preset healthy value is a faulty node.

18. The apparatus according to claim 17, wherein the calculation unit is specifically configured to:

calculate the M assessed values based on jitters of the M pieces of heartbeat delay data in the N sets of heartbeat delay data, wherein the jitters of the M pieces of heartbeat delay data are jitters of heartbeat delay data between the first node and each of the M nodes, and a greater jitter amplitude of heartbeat delay data indicates a greater assessed value.

**19.** The apparatus according to claim 18, wherein the calculation unit is specifically configured to:
calculate the M assessed values based on the jitters of the M pieces of heartbeat delay data and delay levels of the M pieces of heartbeat delay data in the N sets of heartbeat delay data, wherein the delay levels of the M pieces of heartbeat delay data are delay levels of the heartbeat delay data between the first node and each of the M nodes.

**20.** The apparatus according to claim 19, wherein the calculation unit is specifically configured to:
calculate the M assessed values based on the jitters of the M pieces of heartbeat delay data, the delay levels of the M pieces of heartbeat delay data, and packet loss statuses of the M pieces of heartbeat delay data in the N sets of heartbeat delay data, wherein the packet loss statuses of the M pieces of heartbeat delay data are packet loss statuses of the heartbeat delay data between the first node and each of the M nodes, and a greater quantity of lost packets indicates a greater assessed value.

**21.** The apparatus according to any one of claims 18 to 20, wherein the apparatus further comprises:
a deletion unit, configured to delete invalid data from the N sets of heartbeat delay data before the assessment unit calculates the M assessed values based on the N sets of heartbeat delay data, wherein N sets of heartbeat delay data obtained after the invalid data is deleted are used to calculate the M assessed values.

**22.** The apparatus according to any one of claims 17 to 21, wherein the apparatus further comprises:
a determining unit, configured to: after the calculation unit calculates the M assessed values based on the N sets of heartbeat delay data, if a quantity of assessed values greater than the preset healthy value in the M assessed values exceeds a preset percentage, determine that the first node is a faulty node; or if a quantity of assessed values greater than the preset healthy value in the M assessed values does not exceed a preset percentage, determine that the first node is a normal node.

**23.** The apparatus according to claim 22, wherein the apparatus further comprises:
a processing unit, configured to idle or close the first node after the determining unit determines that the first node is a faulty node.

**24.** The apparatus according to claim 22, wherein the determining unit is further configured to:
after determining that the first node is a normal node, determine a management node in the node cluster based on the M assessed values.

**25.** The apparatus according to claim 24, wherein the determining unit is specifically configured to:

determine all normal nodes in the node cluster based on the M assessed values, wherein if an assessed value is less than or equal to the preset healthy value, it indicates that a corresponding node is a normal node;
obtain sequence numbers of the determined normal nodes; and
compare a sequence number of the first node with the obtained sequence numbers, and if the sequence number of the first node is less than any one of the obtained sequence numbers, determine that the first node is the management node.

**26.** The apparatus according to claim 25, wherein the apparatus further comprises:
a processing unit, configured to: after the determining unit determines that the first node is the management node, remove or isolate K nodes from the M nodes based on the M assessed values, wherein the K nodes are nodes whose assessed values are greater than the preset healthy value.

**27.** The apparatus according to any one of claims 16 to 26, wherein the trigger condition for node health assessment is that the first node detects an abnormal node in the node cluster or the first node receives a message that is broadcast by another node and that indicates that there is an abnormal node.

**28.** The apparatus according to any one of claim 27, wherein the judging unit is further configured to:

before the calculation unit calculates the M assessed values based on the N sets of heartbeat delay data, determine whether the abnormal node recovers to normal within preset duration; and
when the abnormal node does not recover to normal within the preset duration, the calculation unit calculates the M assessed values based on the N sets of heartbeat delay data.

**29.** The apparatus according to any one of claims 16 to 26, wherein the trigger condition for node health assessment is that the first node detects that a current moment is a preset cycle moment.

30. The apparatus according to claim 25 to 26, wherein the sequence number is a numerical value obtained by a node by using a preset algorithm based on an Internet Protocol IP address and a port number of the node.

31. A fault detection system, wherein the system is a distributed node cluster system, the node cluster system comprises a plurality of nodes, and each of the plurality of nodes is the first node according to any one of claims 16 to 30.

32. A fault detection apparatus, comprising a processor, a transceiver, and a memory, wherein the processor, the transceiver, and the memory are connected by using a bus, the memory stores a computer instruction, and the processor is configured to implement the method according to any one of claims 1 to 15 by executing the computer instruction.

33. A computer-readable storage medium, comprising an instruction, wherein when the instruction runs on a computer, the computer performs the method according to any one of claims 1 to 15.

34. A computer program product, wherein the computer program product comprises a computer software instruction, and the computer software instruction may be loaded by using a processor, to implement the method according to any one of claims 1 to 15.

FIG. 1

FIG. 2

Node 100

Network interface 131

Network controller 130

Central processing unit 110

Memory 120

FIG. 3

A first node collects N sets of heartbeat data — 401

The first node calculates M assessed values based on the N sets of heartbeat data — 402

Determine whether a quantity of assessed values greater than a preset healthy value in the M assessed values exceeds a preset percentage — 403

No

Yes

The first node determines that the first node is a faulty node — 404

The first node determines that the first node is a normal node — 405

The first node determines a management node in a node cluster based on a node whose self-test result is normal among M nodes — 406

If the first node determines the first node as the management node, the first node removes or isolates K nodes from the M nodes based on the M assessed values — 407

FIG. 4

Find an abnormal node

Collect network-wide
heartbeat data

Does the
abnormal node recover
to normal

Yes

No

End

Make an assessment decision

FIG. 5

Heartbeat data
Historical heartbeat delay data $T_0$
Length $D_{wo}$
Quantity Ln of lost packets

$T_0$, Ln, $D_{wo}$

1. Noise reduction
and filtering
Historical data $T_0$

1)

T

T

T, Ln, Dw

2. Delay level
assessment
Historical data T
obtained after
shaping

3. Jitter accumulation
Historical data T obtained
after shaping

4. Packet loss
impact
Quantity Ln of lost
packets
Window length Dw

2)

I

A, Len(T)

L

5. Standardization
Accumulated result A
Delay level I
Packet loss impact L
Valid heartbeat times Len(T)

3)

$\hat{A}$

6. Assessment
Standardized jitter $\hat{A}$
Assessment threshold thres

4)

Assessment result

FIG. 6

FIG. 7

FIG. 8

FIG. 9

602 600

Assessment unit

601 6021 6022

Judging unit Collection unit Calculation unit

Deletion unit Processing unit Determining unit

605 604 603

FIG. 10

700

701 702 703

Processor Memory Transceiver

704

FIG. 11

<table>
<tr><td colspan="2" align="center"><b>INTERNATIONAL SEARCH REPORT</b></td><td colspan="2">International application No.<br><br><b>PCT/CN2018/079422</b></td></tr>
</table>

| A. | CLASSIFICATION OF SUBJECT MATTER |
|---|---|

H04L 12/24(2006.01)i

According to International Patent Classification (IPC) or to both national classification and IPC

| B. | FIELDS SEARCHED |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, EPODOC, WPI, CNKI, GOOGLE, IEEE: 时延, 心跳, 故障, 节点, 分布式, 健康, 评估, 丢包, 抖动, 正常, 异常, delay, heartbeat, fault, node, distribute, health, assess, lost, dithering, normal, abnormal

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107204879 A (ZHEJIANG UNIVERSITY) 26 September 2017 (2017-09-26) description, paragraphs [0032]-[0063] | 1-34 |
| A | CN 101795234 A (BEIHANG UNIVERSITY) 04 August 2010 (2010-08-04) entire document | 1-34 |
| A | CN 102355369 A (HUAWEI TECHNOLOGIES CO., LTD.) 15 February 2012 (2012-02-15) entire document | 1-34 |
| A | US 2005050398 A1 (INTERNATIONAL BUSSINESS MACHINES CORPORATION) 03 March 2005 (2005-03-03) entire document | 1-34 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 December 2018** | **27 December 2018** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2018/079422**

| Patent document cited in search report | | | Publication date (day/month/year) | Patent family member(s) | | | Publication date (day/month/year) |
|---|---|---|---|---|---|---|---|
| CN | 107204879 | A | 26 September 2017 | None | | | |
| CN | 101795234 | A | 04 August 2010 | CN | 101795234 | B | 01 February 2012 |
| CN | 102355369 | A | 15 February 2012 | WO | 2013044828 | A1 | 04 April 2013 |
| | | | | CN | 102355369 | B | 08 January 2014 |
| US | 2005050398 | A1 | 03 March 2005 | US | 7941690 | B2 | 10 May 2011 |
| | | | | US | 7284147 | B2 | 16 October 2007 |
| | | | | JP | 2005073277 | A | 17 March 2005 |
| | | | | KR | 100617344 | B1 | 31 August 2006 |
| | | | | CN | 1592225 | A | 09 March 2005 |
| | | | | KR | 20050022329 | A | 07 March 2005 |
| | | | | TW | I310494 | B | 01 June 2009 |
| | | | | TW | 200511002 | A | 16 March 2005 |
| | | | | JP | 3903437 | B2 | 11 April 2007 |
| | | | | US | 2010115338 | A1 | 06 May 2010 |
| | | | | CN | 1303786 | C | 07 March 2007 |

Form PCT/ISA/210 (patent family annex) (January 2015)